**Europäisches Patentamt**

**European Patent Office**

**Office européen des brevets**

(11) Veröffentlichungsnummer: **0 320 704**
**A2**

## EUROPÄISCHE PATENTANMELDUNG

(21) Anmeldenummer: **88120063.8**

(22) Anmeldetag: **01.12.88**

(51) Int. Cl.⁴: **C08L 51/08 , C08F 283/12 ,**
**//(C08F283/12,220:12)**

(30) Priorität: **12.12.87 DE 3742180**

(43) Veröffentlichungstag der Anmeldung:
**21.06.89 Patentblatt 89/25**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Piejko, Karl-Erwin, Dr.**
**Unterscheider Weg 7a**
**D-5060 Bergisch Gladbach 2(DE)**
Erfinder: **Lindner, Christian, Dr.**
**Riehler Strasse 200**
**D-5000 Köln 60(DE)**
Erfinder: **Korte, Siegfried, Dr.**
**Engstenberger Höhe 3**
**D-5068 Odenthal(DE)**

(54) **Pfropfpolymerisat-Dispersionen.**

(57) Fließfähige, stabile Dispersionen von vernetzten Kautschuken in Form diskreter Teilchen eines mittleren Durchmessers von 0,1-3 μm in organischen Flüssigkeiten, die enthalten

I) als Kautschuk bis zu 60 Gew.-% (bezogen auf die Gesamtdispersion) eines vernetzten, kautschukartigen teilchenförmigen Pfropfpolymerisates aus a) einem vernetzten Siliconkautschuk als Kern und darauf pfropfpolymerisiertem vernetztem Acrylatkautschuk b),
und

II) als kontinuierliche organische Phase ein flüssiges, organisches N,N-substituiertes Amid,
und ein Verfahren zu ihrer Herstellung.

EP 0 320 704 A2

## Pfropfpolymerisat-Dispersionen

Die Erfindung betrifft fließfähige, stabile Dispersionen spezieller vernetzter Pfropfpolymerisate auf Siliconkautschuk in flüssigen N,N-substituierten Amiden.

Dispersionen von Dien- oder Acrylatkautschuken in den verschiedensten organischen Medien und Verfahren zu ihrer Herstellung sind bekannt (DE-OS 29 10 154, 29 10 168, 29 10 153).

Überträgt man diese Herstellungsverfahren (z.B. das der DE-OS 29 10 154) auf vernetzte Siliconkautschuke, wie sie üblicherweise durch Dispersionspolymerisation von Siliconmonomeren in Wasser in Form feiner Teilchen erhalten werden können, und wählt flüssige Amide als organisches Medium, so werden keine stabilen, einwandfreien organischen Kautschukdispersionen erhalten, insbesondere nicht in wasserfreier Form.

Organische Amide als Medium für Dispersionen sind aber besonders attraktiv, weil sie hervorragende Löseeigenschaften aufweisen und zusätzlich aprotisch sind. Andererseits interessieren Siliconkautschuke technisch deshalb besonders, weil sie vorteilhafte Eigenschaften sowohl bei tiefen als auch bei hohen Temperaturen aufweisen können.

Es wurde gefunden, daß sich vernetzte Siliconkautschukteilchen eines mittleren Teilchendurchmessers von 0,1-3 $\mu$m in organischen Amiden als Medium dispergieren lassen, wenn sie mit vernetztem Acrylatkautschuk bepfropft sind. Die resultierenden Dispersionen sind nach Wasserabtrennung selbst bei hoher Konzentration an dispergiertem Kautschuk niedrigviskos und sehr lagerstabil. Sie zeigen auch bei Lagerung über längere Zeit (z.B. mehrere Monate) keine nennenswerte Neigung zu sedimentieren oder zu koagulieren. Die Dispersionen im Sinne der Erfindung können außerdem überraschend einfach hergestellt werden.

Gegenstand der Erfindung sind fließfähige, stabile Dispersionen von vernetzten Kautschuken in Form diskreter Teilchen eines mittleren Durchmessers von 0,1-3 $\mu$m in organischen Flüssigkeiten, die enthalten

I) als Kautschuk bis zu 60 Gew.-%, insbesondere bis zu 40 Gew.-% (bezogen auf die Gesamtdispersion) eines vernetzten, kautschukartigen, teilchenförmigen Pfropfpolymerisats aus a) einem vernetzten Siliconkautschuk als Kern und darauf pfropfpolymerisiertem vernetztem Acrylat-Kautschuk b), und

II) als kontinuierliche organische Phase ein flüssiges organisches, N, N-substituiertes Amid.

Ein weiterer Gegenstand der Erfindung ist ein Verfahren zur Herstellung der fließfähigen, stabilen Pfropfpolymerisat-Dispersionen in flüssigen Amiden.

Pfropfkautschuke I) im Sinne der Erfindung enthalten teilchenförmige, hochvernetzte Siliconkautschukteilchen eines mittleren Durchmessers ($d_{50}$) von 0,1-3 $\mu$m, insbesondere von 0,1-1 $\mu$m und Gelgehalten von größer als 60 Gew.-%, insbesondere größer als 80 Gew.-%. Der auf die Siliconkautschukteilchen aufgepfropfte, vernetzte Acrylatkautschuk liegt in den Pfropfkautschuken I) bevorzugt in Mengen von 50 Gew.-% oder weniger vor, insbesondere in Mengen von 30 - 5 Gew.-%. Die Pfropfkautschuke I) besitzen vorzugsweise Gelgehalte >70 Gew.-%, insbesondere >85 Gew.-%. Der Acrylatkauschukanteil der Pfropfkautschuke I) wird unter vernetzenden Bedingungen auf die Siliconkautschukteilchen aufpolymerisiert; dabei können sich bilden: Pfropfpolymerisate im Sinne kovalenter Verbindungen von Silicon-und Acrylatkautschuk, vernetzte, die Siliconkautschukteilchen mehr oder weniger mechanisch umhüllende Acrylatkautschukanteile sowie gegebenenfalls kleine Mengen löslicher Acrylatkautschuke. Als Pfropfpolymerisate I) werden im Zusammenhang mit der Erfindung die Reaktionsprodukte bezeichnet, die durch vernetzende Acrylatpolymerisation in Gegenwart von Siliconkautschukteilchen erhalten werden, unabhängig vom tatsächlichen Ausmaß der Pfropfung.

Der Kern a) besteht aus einem vernetzten Siliconkautschuk, der aus Siloxan-Einheiten der allgemeinen Formeln

$R_2SiO$; $RSiO_{3/2}$; $R_3SiO_{1/2}$ und $SiO_2$,

aufgebaut ist,

wobei R einen einwertigen Rest darstellt.

Die Mengen der verschiedenen Siloxaneinheiten sind dabei so bemessen, daß auf 100 Mol Einheiten der Formel $R_2SiO$ 0 bis 10 Mol Einheiten der Formel $RSiO_{3/2}$, 0 bis 1,5 Mol Einheiten $R_3SiO_{1/2}$ und 0 bis 3 Mol Einheiten der Formel $SiO_2$ vorhanden sind.

R kann dabei entweder ein einwertiger gesättigter Kohlenwasserstoffrest mit 1 bis 18 Kohlenstoffatomen, der Phenylrest oder ein Alkoxy-Rest oder eine radikalisch angreifbare Gruppe wie der Vinyl- oder der $\gamma$-Mercaptopropylrest sein. Bevorzugt sind mindestens 80 % aller Reste R Methyl; besonders bevorzugt sind Kombinationen aus Methyl und Ethyl.

Bevorzugte Siliconkautschuke a) enthalten eingebaute Einheiten radikalisch angreifbarer Gruppen, insbesondere Vinyl-, Allyl-, Chloralkyl-, Mercaptogruppen, vorzugsweise in Mengen von 2 - 10 Mol-%, bezogen auf alle Reste R.

Das auf den Kern a) aufgepfropfte Kautschukpolymerisat b) stellt einen teil- bis hochvernetzten Acrylatkautschuk dar und ist ein Polymerisat aus 100 -60 Gew.-% Alkylacrylat, 60 - 0 Gew.-% anderen, mit Alkylacrylat copolymerisierbaren Monomeren und 0,1 - 10 Gew.-%, bezogen auf die Summe von Alkylacrylat und anderen Monomeren eines vernetzenden Monomeren mit wenigstens zwei Vinyl- und/oder Allylgruppen im Molekül.

Alkylacrylate in Sinne der Erfindung sind $C_1$-$C_{14}$-Alkylacrylate, wie Methyl-, Ethyl-, Butyl, Octyl-, 2-Ethylhexylacrylat, Chlorethylacrylat, Benzylacrylat, Phenethylacrylat, insbesondere $C_1$-$C_6$-Alkylester, bevorzugt Butylacrylat; mit den Alkylacrylaten copolymerisierbare Monomere sind bevorzugt Styrol, $\alpha$-Methylstyrol, Halogenstyrol, Methoxystyrol, Acrylnitril, Methacrylnitril, $C_1$-$C_8$-Alkylmethacrylate, die im Alkylrest gegebenenfalls durch funktionelle Gruppen wie Hydroxyl-, Epoxid-, Amin-Gruppen substituiert sein können, beispielsweise Methyl-, Cyclohexylmethacrylat, Glycidylmethacrylat, Hydroxyethyl-, Hydroxypropylmethacrylat, (Meth)Acrylsäure, Maleinsäure(ester), Fumarsäure, Itaconsäure, (Meth)Acrylamide, Vinylacetat, Vinylpropionat oder N-Methylolverbindungen der (Meth)Acrylamide. Vernetzende Monomere im Sinne der Erfindung sind Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatomen im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest) wie Allylmethacrylat; Phosphorsäureester, beispielsweise Triallylphosphat und 1,3,5-Tri acrylolylhexahydro-s-triazin. Besonders bevorzugte polyfunktionelle Monomere sind Triallylcyanurat, Triallylisocyanurat, Triallylphosphat, Allylmethacrylat.

Organische Phasen II) im Sinne der Erfindung sind organische, bei Zimmertemperatur flüssige Amide mit disubstituiertem Amidstickstoff wie Dimethylformamid, Dimethylacetamid, N-Methylpyrrolidon, N-Methylcaprolactam, Tetramethylharnstoff, Hexamethylphosphorsäure-trisamid, 1,3-Dimethyl-2-imidazolidinon, N-Vinyl-N-methylacetamid, N-Vinylpyrrolidon, N-Vinylcaprolactam, vorzugsweise Dimethylacetamid, N-Methylpyrrolidon, N-Methylcaprolactam.

Die Pfropfkautschuke I) im Sinne der Erfindung sind in wäßriger Emulsion wie folgt herstellbar: zunächst wird in einer ersten Stufe durch Emulsionspolymerisation eines Siliconoligomeren der Siliconkautschuk, also der Kern a), hergestellt:
Die Herstellung einer Emulsion eines langkettigen Siliconöls und OH-Endgruppen durch Emulsionspolymerisation ist bekannt. Beispielhaft wird hierzu auf die US-PS 2 891 910 sowie auf die GB-PS 1 024 024 verwiesen. Besonders bevorzugt ist in Gegenwart einer Alkylbenzolsulfonsäure in Emulsion zu polymerisieren, da hier Emulgator und Polymerisationskatalysator in einem vorliegen. Nach der Polymerisation wird die Säure neutralisiert.

Anstelle der Alkylbenzolsulfonsäuren können auch n-Alkylsulfonsäuren eingesetzt werden. Es ist möglich, neben der katalytisch und emulgierend wirksamen Sulfonsäure zusätzlich andere Emulgiermittel als Co-Emulgatoren einzusetzen.

Co-Emulgatoren können nichtionisch oder anionisch sein. Als anionische Co-Emulgatoren kommen insbesondere Salze der obengenannten n-Alkyl- oder Alkylbenzolsulfonsäuren in Frage. Nichtionische Co-Emulgatoren sind Polyoxyethylenderivate von Fettalkoholen und Fettsäuren.

Im allgemeinen haben Siliconöle, die durch Emulsionspolymerisation in Anwesenheit von nichtionischen Co-Emulgatoren entstanden sind, niedrigeres Molekulargewicht als solche, die ohne Co-Emulgator hergestellt wurden. Das Molekulargewicht des bei der Emulsionspolymerisation entstehenden Siliconöls mit OH-Endgruppen kann auch über die Temperatur bei der Gleichgewichtsbildung zwischen Siloxan, Wasser und dem durch Ringöffnung des Siloxans zunächst gebildeten Silanöl beeinflußt werden.

Radikalisch angreifbare Gruppen können in das bevorzugte Siliconpolymer durch Mitverwendung entsprechender Siloxanoligomerer eingebaut werden. Hierbei geeignete Siloxanoligomere sind z.B. Tetramethyltetravinylcyclotetrasiloxan, γ-Mercaptopropylmethyldimethoxysilan und dessen Hydrolysat.

Solche "funktionellen" Oligomere werden dem Basisoligomer, z.B. Octamethylcyclotetrasiloxan, in der erforderlichen Mengen zugefügt.

Analog kann auch der Einbau längerkettiger Alkylreste R, z.B. Ethyl-, Propyl- und der Einbau von Phenylgruppen erreicht werden.

Der Siliconkautschuk muß wenigstens teilvernetzt sein.

Eine ausreichende Vernetzung kann schon stattfinden, wenn die bevorzugt vorhandenen Vinyl- und Mercaptopropylgruppen bei der Emulsionspolymerisation der Siloxanoligomeren miteinander reagieren. Dann ist die Zugabe eines externen Vernetzers nicht erforderlich, jedoch kann ein vernetzendes Silan zugefügt werden, um den Vernetzungsgrad des Siliconkautschukes zu erhöhen.

Verzweigungen oder Vernetzungen können durch Zugabe von z.B. Tetraethoxysilan oder eines Silans der allgemeinen Formel $RSiX_3$ (wobei X eine hydrolysierbare Gruppe, insbesondere den Alkoxyrest darstellt) eingebaut werden. R hat die im vorhergehenden beschriebene Bedeutung. Bevorzugt sind R = Methyl und R = Phenyl. Insbesondere bevorzugt sind neben Tetraethoxysilan Methyltrimethoxysilan oder Phenyltrimethoxysilan.

In einer zweiten Stufe werden dann die den vernetzten Acrylatkautschuk b) bildenden Monomeren (Alkylacrylat, Vernetzungsmonomere und gegebenenfalls weitere Monomere) in Gegenwart der Siliconkautschukemulsion der ersten Stufe vernetzend pfropfpolymerisiert. Bei dieser Pfropfpolymerisation soll die Bildung neuer Teilchen möglichst unterbunden werden. Ein Emulsionsstabilisator muß in zur Oberflächenbedeckung der Teilchen erforderlichen Menge vorhanden sein. Die Pfropfpolymerisation wird vorzugsweise im Temperaturbereich von 30 - 90 °C, insbesondere von 50 - 80 °C, durchgeführt und mit bekannten Radikalinitiatoren initiiert, beispielsweise Azoinitiatoren, Peroxiden, Perestern, Persulfaten, Perphosphaten oder durch Redoxinitiatorsysteme. Bevorzugt werden wasserlösliche anorganische Peroxisulfate und -phosphate. Nach der Pfropfpolymerisation von b) auf die Siliconkautschukteilchen a) fallen stabile wäßrige Emulsionen der Siliconkautschuk/Acrylatkautschukteilchen an; üblicherweise mit Polymerfeststoffgehalten im Bereich von 20 - 50 Gew.-%.

Die erfindungsgemäßen Dispersionen in organischen Amiden können wie folgt hergestellt werden. Die wäßrigen Emulsionen der Pfropfkautschukteilchen werden mit einem flüssigen Amid (II) unter Rühren vermischt; dabei ist es vorteilhaft, das Amid vorzulegen und portionsweise oder halbkontinuierlich die wäßrige Emulsion unter guter Durchmischung einzutragen.

Dies kann bei Temperaturen von Zimmertemperatur bis zur Siedetemperatur des eingesetzten Amids geschehen. Anschließend wird aus der Mischung das Wasser abgetrennt, z.B. durch Destillation; bevorzugt arbeitet man dabei bei vermindertem Druck und Destillation azeotroper Gemische aus Amid und Wasser. Gegebenenfalls muß während dieser Destillation weiteres Amid zugegeben werden, wenn man nämlich bei stationärer Polymerkonzentration in Amid arbeiten möchte; dies ist bevorzugt. Nach Abtrennung des Wassers kann die erfindungsgemäße Dispersion durch abdestillieren von Amid konzentriert werden.

Die erhaltenen Dispersionen von Pfropfpolymerisaten in flüssigen organischen Amiden sind fließfähig, lagerstabil und niedrigviskos. Sie lassen sich problemlos pumpen, fördern und lagern und sind wenig empfindlich gegen Säuren, Basen und Elektrolyten. Die erfindungsgemäßen Dispersionen haben hervorragende Lösungseigenschaften für verschiedene schwerlösliche organische und anorganische Stoffe, auch für schwerlösliche Polymere; sie erlauben aufgrund der guten Lösungseigenschaften die direkte Vermischung schwerlöslicher Stoffe (insbesondere Polymere) mit den durch Acrylatkautschuk modifizierten Siliconkautschukteilchen ohne aufwendige Mischtechnik (z.B. Schmelzvermischen). Deshalb lassen sich die Dispersionen besonders dort verwenden, wo man mit nur schwierig aufschmelzbaren Stoffen (Polymeren) arbeiten und abmischen möchte; beispielsweise mit Polyacrylnitril. Die Dispersionen verbessern, in der beschriebenen Art einem Polymer zugesetzt, dessen Eigenschaften wie Wasseraufnahme, Benetzung und Antistatik.

Beispiele

### 1) Herstellung einer Siliconkautschukemulsion (Latex)

38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt.

0,5 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-Teile Dodecylbenzolsulfonsäure hinzu. Die Emulsion wird 2 Stunden bei 85 °C und anschließend 36 Stunden bei Zimmertemperatur gerührt. Neutralisiert wird mit Hilfe von 5 n-NaOH. Es resultiert eine stabile Emulsion mit einem Feststoffgehalt von ca. 36 Gew.-%. Das Polymer besitzt einen Gelgehalt von 82 Gew.-%, gemessen in Toluol.

### 2) Herstellung von Emulsionen, enthaltend mit Acrylatkautschuk gepfropfte Siliconteilchen

In einem Reaktor werden vorgelegt:
2500 Gew.-Teile des Latex aus Beispiel 1
228 Gew.-Teile Wasser.

4

Bei 70°C gibt man eine Lösung von 3 Gew.-Teilen Kaliumperoxidisulfat in 100 Gew.-Teilen Wasser in den Reaktor ein.

Anschließend werden folgende Lösungen innerhalb von 5 Stunden bei 70°C in den Reaktor eindosiert:

Lösung 1: siehe nachstehende Übersicht

Lösung 2: 500 Gew.-Teile Wasser

10 Gew.-Teile Na-Salz von $C_{14}$-$C_{18}$-Alkylsulfonsäuren

Dann wird innerhalb von 4 Stunden bei 70°C auspolymerisiert. Der gebildete Latex enthält das Polymerisat in einer Konzentration von 35 Gew.-%. Das Polymerisat besitzt einen Gelgehalt von 92 Gew.-%, gemessen in Toluol, und besteht aus 70 Gew.-% Siliconkautschuk und 30 Gew.-% Acrylatkautschuk. Die Emulsion besitzt mittlere Teilchendurchmesser ($d_{50}$) von 0,24 $\mu$m.

| Hergestellte Pfropfpolymerisate: | | |
|---|---|---|
| Nr. | Zusammensetzung der Lösung 1 (Gew.-Teile) | |
| 2.1 | 387 | nBA |
| | 2 | TAC |
| 2.2 | 320 | nBA |
| | 3 | TAC |
| | 47 | HEMA |
| 2.3 | 350 | nBA |
| | 2 | TAC |
| | 37 | ACN |
| nBA = n-Butylacrylat; TAC = Triallylcyanurat; | | |
| ACN = Acrylnitril; HEMA = Hydroxyethylmethacrylat. | | |

3) Herstellung der erfindungsgemäßen Dispersionen sowie Vergleichsversuche

Eine Menge der Siliconkautschukemulsion gemäß Beispiel 1 (Vergleichsversuch) sowie der Siliconkautschukemulsionen gemäß Beispielen 2.1-2.3, die 100 Gew.-Teile Polymerisat enthält, wird mit 800 Gew.-Teilen flüssigem Amid bei Raumtemperatur vermischt (unter gutem Rühren). Bei einer Temperatur von 70-90°C wird unter vermindertem Druck das Wasser (in Form eines Wasser/Amidgemisches) abdestilliert; gleichzeitig wird so viel flüssiges Amid zum Ansatz gegeben, wie bei der Destillation abgetrennt wird. Wenn das Wasser weitgehend abgetrennt ist, destilliert man bei 90-120°C so viel Amid ab, bis die gebildeten Kautschukdispersionen einen Polymerisatgehalt von 20 Gew.-% haben. Die Dispersionen sind dünnflüssige, opake Flüssigkeiten.

| Lfd. Nr. | Eingesetztes, flüssiges Amid | Eingesetzte, wäßrige Kautschukemulsion gemäß Beispiel | | Beschreibung |
|---|---|---|---|---|
| 3.1 | NMP | 1 | (Vergleich) | - |
| 3.2 | NMP | 2.1 | | + |
| 3.3 | NMP | 2.2 | | + |
| 3.4 | DMF | 2.1 | | + |
| 3.5 | DMF | 2.2 | | + |
| 3.6 | NMC | 2.1 | | + |
| 3.7 | NMC | 2.2 | | + |
| 3.8 | NMC | 2.3 | | + |
| 3.9 | DMA | 2.1 | | + |
| 3.10 | DMA | 1 | (Vergleich) | - |
| 3.11 | NVP | 2.2 | | + |
| NMP = N-Methylpyrrolidon | | | | |
| DMF = Dimethylformamid | | | | |
| NMC = N-Methylcaprolactam | | | | |
| DMA = Dimethylacetamid | | | | |
| NVP = N-Vinylpyrrolidon | | | | |

Nur bei Verwendung der mit Acrylatkautschuk modifizierten Siliconkautschuke bilden sich problemlos die erfindungsgemäßen organischen Dispersionen (+); setzt man die unmodifizierte Siliconkautschukemulsion ein, so werden keine homogenen, lagerstabilen Dispersionen erhalten (-).

Herstellung einer PAN-Folie

100 Gew.-Teile der Dispersion gemäß Beispiel 3.2 werden mit 1620 Gew.-Teilen NMP verdünnt; in dieser verdünnten Dispersion löst man bei Zimmertemperatur 180 Gew.-Teile Polyacrylnitril mit einem K-Wert von 80. Aus der erhaltenen Lösung/Dispersion werden Folien hergestellt. Die Folien sind transluzsent und besitzen ein besonderes Fibrillierungsverhalten nach Verstreckung.

**Ansprüche**

1. Fließfähige, stabile Dispersionen von vernetzten Kautschuken in Form diskreter Teilchen eines mittleren Durchmessers von 0,1-3 µm in organischen Flüssigkeiten, die enthalten

I) als Kautschuk bis zu 60 Gew.-% (bezogen auf die Gesamtdispersion) eines vernetzten, kautschukartigen teilchenförmigen Pfropfpolymerisates aus a) einem vernetzten Siliconkautschuk als Kern und darauf pfropfpolymerisiertem vernetztem Acrylatkautschuk b), und

II) als kontinuierliche organische Phase ein flüssiges, organisches, N,N-substituiertes Amid.

2. Verfahren zur Herstellung der stabilen fließfähigen Kautschukdispersionen gemäß Anspruch 1, dadurch gekennzeichnet, daß man eine wäßrige Emulsion eines vernetzten, kautschukartigen, teilchenförmigen Pfropfpolymerisates entsprechend I) in Anspruch 1 in einem flüssigen, N,N-substituierten Amid unter Agitation verteilt und das Wasser abtrennt.